# EUROPÄISCHE PATENTSCHRIFT

(11) **EP 1 419 623 B1**
(45) Veröffentlichungstag und Bekanntmachung des Hinweises auf die Patenterteilung: **16.03.2005**
(21) Anmeldenummer: 02758475.4
(22) Anmeldetag: 19.08.2002
(51) Int. Cl.: H04L 12/56

(54) **ÜBERTRAGUNG VON DATENPAKETEN IN EINEM FUNK-KOMMUNIKATIONSSYSTEM UNTER NUTZUNG EINES GEMEINSAMEN HARQ (HYBRID AUTOMATIC REPEAT REQUEST)-PROZESSES**
TRANSMISSION OF DATA PACKETS IN A RADIOCOMMUNICATION SYSTEM USING A COMMON HYBRID AUTOMATIC REPEAT REQUEST (HARQ) PROCESS
TRANSMISSION DE PAQUETS DE DONNEES DANS UN SYSTEME DE COMMUNICATION RADIO, PAR UTILISATION D'UN PROCESSUS COMMUN HARQ (HYBRID AUTOMATIC REPEAT REQUEST)

(30) Priorität: 22.08.2001 DE 10141091
(43) Veröffentlichungstag der Anmeldung: 19.05.2004
(73) Patentinhaber: Siemens Aktiengesellschaft, 80333 München (DE)
(72) Erfinder: RAJI, Fariba, A-1200 Wien (AT); SCHNIEDENHARN, Jörg, 13587 Berlin (DE); MEILING, Axel, 13597 Berlin (DE)
(86) Internationale Anmeldenummer: PCT/EP2002/009263
(87) Internationale Veröffentlichungsnummer: WO 2003/019875

(56) Entgegenhaltungen:
- EP-A- 0 993 149
- US-A- 5 987 018
- MAGUIRE R ET AL: "HIGHSPEED IM MOBILNETZ MIT STANDARDS WIE GPRS SURFEN NUTZER WIE IM FESTNETZ-ISDN" NET - ZEITSCHRIFT FUER KOMMUNIKATIONSMANAGEMENT, HUTHIG VERLAG, HEILDERBERG, DE, Bd. 55, Nr. 1/2, 1. Januar 2001 (2001-01-01), Seiten 43-46, XP001001948 ISSN: 0947-4765
- OTSUKI S ET AL: "SHARED-SEQUENCE-NUMBER ARQ SCHEME FOR MULTI-MEDIA WIRELESS COMMUNICATION SYSTEMS" 1999 IEEE 49TH. VEHICULAR TECHNOLOGY CONFERENCE. HOUSTON, TX, MAY 16 - 20, 1999, IEEE VEHICULAR TECHNOLOGY CONFERENCE, NEW YORK, NY: IEEE, US, Bd. 2 CONF. 49, 16. Mai 1999 (1999-05-16), Seiten 953-957, XP000903188 ISBN: 0-7803-5566-0
- "Universal Mobile Telecommunications System (UMTS); Medium Access Control (MAC) protocol specification (3GPP TS 25.321 version 5.0.0 Release 5) ETSI TS 125 321 V5.0.0 (2002-03)" ETSI 3GPP, März 2002 (2002-03), Seiten 1-53, XP002222164

## Beschreibung

Die Erfindung betrifft ein Verfahren und eine Funkstation zur Übertragung von Datenpaketen in einem Funk-Kommunikationssystem, insbesondere in einem Mobilfunksystem.

In Funk-Kommunikationssystemen werden Informationen (beispielsweise Sprache, Bildinformationen oder andere Daten) mit Hilfe von elektromagnetischen Wellen über eine Funkschnittstelle zwischen sendender und empfangender Funkstation (Basisstation bzw. Mobilstation) übertragen. Das Abstrahlen der elektromagnetischen Wellen erfolgt dabei mit Trägerfrequenzen, die in dem für das jeweilige System vorgesehenen Frequenzband liegen. Für zukünftige Mobilfunksysteme mit CDMAoder TD/CDMA-Übertragungsverfahren über die Funkschnittstelle, beispielsweise das UMTS (Universal Mobile Telecommunication System) oder andere Systeme der 3. Generation sind Frequenzen im Frequenzband von ca. 2000 MHz vorgesehen. Frequenzmultiplex (FDMA), Zeitlagenmultiplex (TDMA) oder ein als Codemultiplex (CDMA) bekanntes Verfahren dienen dabei der Unterscheidung der Signalquellen.

Im Rahmen der Standardisierung des UMTS-Systems werden derzeit Verfahren spezifiziert, die eine effiziente Übertragung von Paketdaten ermöglichen. Eine wichtige Technik sind hierbei sogenannte Hybrid ARQ-Verfahren (HARQ). Hybrid ARQ-Verfahren ziehen ihren Vorteil daraus, daß fehlerhaft empfangene Datenpakete in einem Speicher im Empfänger gespeichert werden, um sie mit nachfolgenden, nochmaligen und gegebenenfalls veränderten Übertragungen der Datenpakete kombinieren zu können. Hierdurch kann im Gegensatz zu bekannten reinen ARQ-Verfahren, in denen fehlerhafte Datenpakete verworfen werden, vorteilhaft auch von fehlerhaften Datenpaketen zur Erhöhung der Empfangsqualität profitiert werden. Die Datenpakete, die in diesem empfängerseitigen Speicher gesichert werden, müssen sehr schnell ausgelesen werden können, damit keine unnötigen Verzögerungen in der Datenübertragung und -analyse auftreten. Speicher mit dieser Eigenschaft sind üblicherweise sehr teuer.

Das aktuell für den UMTS-Standard spezifizierte System des sogenannten High Speed Downlink Packet Access (HSDPA) hat darüberhinaus den Anspruch, verschiedene Dienste mit verschiedensten QoS-Anforderungen (Quality of Service) gleichzeitig bedienen zu können. Diese verschiedenen QoS-Anforderungen der Daten machen auch eine unterschiedliche Abarbeitung der jeweiligen Daten im HARQ-Prozeß erforderlich. Weiterhin sollen die Datenpakete eines Dienstes, die beim Empfänger ankommen, wieder in eine korrekte Reihenfolge gebracht werden können. Der Empfänger wird die Datenpakete üblicherweise nicht in der korrekten Reihenfolge empfangen, da einzelne Datenpakete während der Übertragung über die Funkschnittstelle gestört sein können und über den ARQ-Mechanismus neu angefordert werden müssen, während andere, ursprünglich später gesendete Datenpakete sofort korrekt empfangen werden.

Zur Erfüllung dieser Anforderungen wird, beispielsweise in der technischen Spezifikation 3GPP TR 25.950 V4.0.0 (2001-03) "3GPP UTRA High Speed Downlink Packet Access", Release 4, vorgeschlagen, für jeden Dienst einen separaten HARQ-Prozeß vorzusehen. Dies führt jedoch nachteilig dazu, daß die Größe des Speichers, der für den HARQ-Prozeß benötigt wird, mit der Anzahl der verschiedenen Dienste zu multiplizieren ist und somit ein großer und teurer Speicher bzw. mehrere Speicher vorgehalten werden müssen.

Aus der EP-A-0 993 149 ist ferner eine Zuordnung von mehreren Datenströmen zu einem physikalischen Kanal für eine Satellitenübertragung zwischen einer Mobile Earth Station und einer Land Earth Station bekannt. Datenpakete der Datenströme werden dabei jeweils durch einen entsprechenden Indikator gekennzeichnet.

Aufgabe der Erfindung ist es, ein Verfahren und eine Funkstation anzugeben, die eine effizientere Nutzung des Speichers ermöglichen. Diese Aufgabe wird durch das Verfahren und die Funkstation gemäß den unabhängigen Patentansprüchen gelöst. Vorteilhafte Ausgestaltungen der Erfindung sind den abhängigen Patentansprüchen entnehmbar.

Erfindungsgemäß wird vorgeschlagen, daß Datenströme mehrerer Dienste einen gemeinsamen HARQ-Prozeß nutzen. Hierdurch kann vorteilhaft der empfangsseitig für den HARQ-Prozeß vorzuhaltende Speicher gegenüber dem einleitend beschriebenen Verfahren reduziert werden.

Zur Differenzierung zwischen unterschiedlichen QoS-Anforderungen der Dienste können die zu übertragenden und/oder sendeseitig gespeicherten Datenpakete mit einer entsprechenden Anforderung verknüpft werden. Dieses kann beispielsweise derart erfolgen, daß jedes Datenpaket mit einer Angabe über die mögliche Anzahl weiterer Übertragungen verknüpft wird. Dieses hängt gegebenenfalls von der jeweiligen maximal möglichen Verzögerung bei der Übertragung ab. Echtzeitdienste wie beispielsweise Sprach- oder Videoübertragung weisen dabei eine geringere mögliche maximale Verzögerung als Nicht-Echtzeitdienste wie beispielsweise ein Herunterladen von Internetinhalten auf.

Ein sogenannter Reordering buffer, d.h. ein empfangsseitiger Speicher, mittels dem die empfangenen Datenpakete vor der Weiterverarbeitung wieder in die ursprüngliche Reihenfolge des Datenstroms gebracht werden, kann für jeden Dienst getrennt vorgesehen werden. Da dieser Speicher relativ langsam und dadurch preisgünstig ist, ist ein Vorhalten mehrerer großer Speicher möglich.

Das erfindungsgemäße Verfahren wird anhand von Ausführungsbeispielen näher beschrieben. Dabei zeigen
- FIG 1: Ein Blockdiagramm des Aufbaus eines Funk-Kommunikationssystems,
- FIG 2: eine schematische Darstellung der erfindungsgemäßen Verfahrensabläufe in einer sendenden und empfangenden Funkstation, und

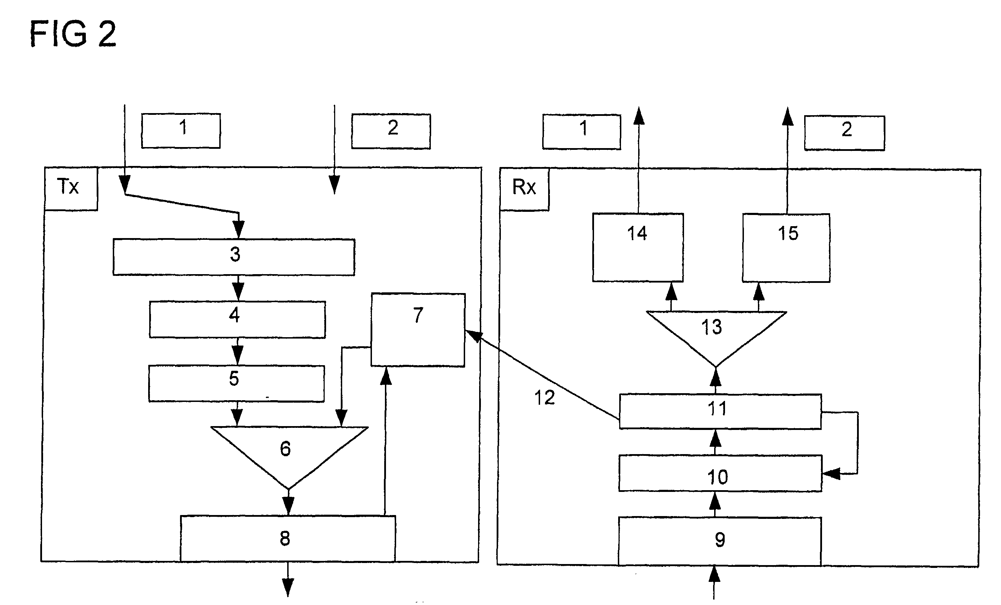

- FIG 2: eine Struktur eines Datenpakets zur Übertragung über die Funkschnittstelle.

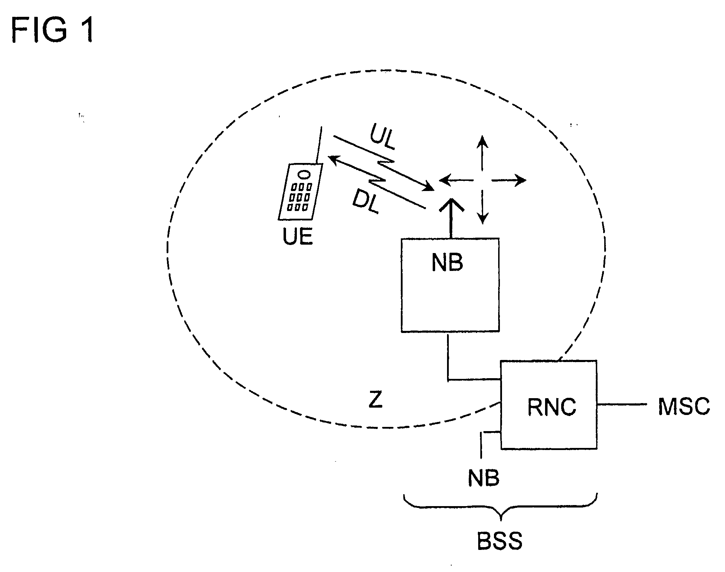

In FIG 1 ist ein beispielhaftes Funk-Kommunikationssystem dargestellt, welches eine Vielzahl von Vermittlungseinrichtungen MSC aufweist, die miteinander verbunden sind. In der Regel bildet zumindest eine dieser Vermittlungseinrichtungen MSC einen Zugang zu weiteren Kommunikationssystemen wie beispielsweise einem Festnetz-Kommunikationssystem. An die Vermittlungseinrichtungen MSC sind Basisstationen NB (Node B) als Sende-/Empfangseinrichtungen des Funk-Kommunikationssystems angebunden. Die Basisstationen NB stehen über Kommunikationsverbindungen mit Endgeräten, speziell. Teilnehmerendgeräten UE (User Equipment) in Verbindung, wobei es sich um mobile oder stationäre Endgeräte handeln kann.

Zwischen der in FIG 1 dargestellten Basisstation NB und dem Teilnehmerendgerät UE kann eine unidirektionale oder eine bidirektionale Kommunikationsverbindung mit einer Aufwärtsrichtung UL (Uplink) von dem Teilnehmerendgerät UE zur Basisstation NB und/oder einer Abwärtsrichtung DL (Downlink) von der Basisstation NB zu dem Teilnehmerendgeräten UE bestehen.

Die FIG 2 zeigt schematisch Funktionalitäten und Einrichtungen einer sendenden Tx (Transmission) und einer empfangenden Rx (Reception) Funkstation. Die Funktionalitäten für das Senden und Empfangen können jeweils in einer Teilnehmerstation bzw. Basisstation verwirklicht sein.

Zunächst werden sendeseitig Daten zur Übertragung über die Funkschnittstelle ausgewählt. In dem Beispiel der FIG 2 sind die Daten verschiedener Dienste durch zwei Datenströme 1, 2 gekennzeichnet. In einem Schritt 3 wird ein Datenstrom, in dem gezeigten Beispiel Datenstrom 1, sowie ein möglicher Übertragungskanal und/oder ein Transportformat ausgewählt. Anschließend werden in Schritt 4 die Datenpaketen des Datenstroms 1 mit einer Datenstrom-Identifikation versehen. Hierbei können für den Fall, daß mehrere Datenpakete eines Datenstroms gleichzeitig zu übertragen sind, diese Datenpakete verbunden (engl. concatenated) werden. Weiterhin werden die Datenpakete in dem Schritt 4 mit einer datenstrom-bzw. diensteindividuellen Sequenznummer versehen. Nachfolgend werden in dem Schritt 5 den Datenpaketen eine jeweilige sogenannte CRC-Checksumme angehängt, die eine empfangsseitige Identifikation von Übertragungsfehlern ermöglicht.

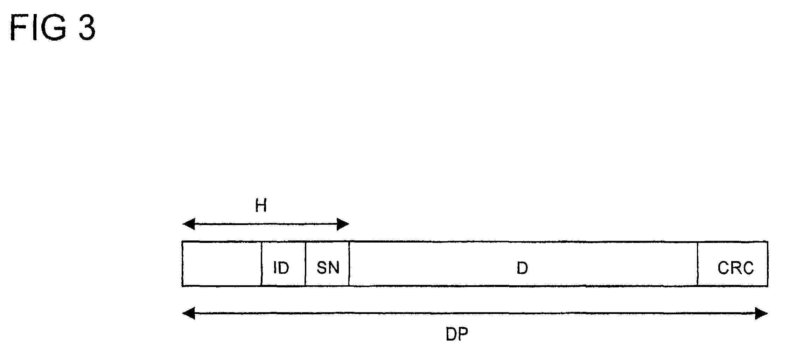

Ein derart ergänztes Datenpaket DP ist beispielhaft in der FIG 3 dargestellt. Dabei wurde das Kopffeld H (Header) des Datenpakets DP durch einen Datenstrom-Identifikator ID und eine Sequenznummer SN (Sequence Number) ergänzt. Das Kopffeld H und die eigentlichen Nutzdaten D werden durch eine Checksumme CRC abgeschlossen. Das Datenpaket DP kann in gleicher Weise auch in einer anderen als der dargestellten Konstellation der einzelnen Elemente verwirklicht sein, ohne hierdurch den Bereich der Erfindung zu verlassen.

Die Datenpakete des Datenstroms 1 werden nachfolgend in Schritt 6 mit in einem sendeseitigen Übertragungsspeicher 7 gespeicherten Datenpaketen, die für den Fall einer fehlerhaften Übertragung zur nochmaligen Übertragung vorgehalten werden, zeitlich gemultiplext und in Schritt 8 über die Funkschnittstelle zu der empfangenden Funkstation Rx übertragen. Das jeweils gesendete Datenpaket wird dann in dem Übertragungsspeicher solange vorgehalten, bis eine positive Bestätigung des Empfangs empfangen wird oder aufgrund der QoS-Anforderungen, wie beispielsweise maximal mögliche Übertragungsverzögerung, eine nochmalige Übertragung des Datenpakets nicht sinnvoll ist.

In der empfangenden Funkstation Rx werden die Datenpakete in Schritt 9 empfangen und in einem schnellen Empfangsspeicher 10 gespeichert. Anschließend erfolgt in Schritt 11 eine jeweilige Prüfung der Checksumme CRC der Datenpakete. Stellt sich in dem Schritt 11 heraus, daß die Checksumme stimmt, so wird in Schritt 12 der sendenden Funkstation Tx mittels einer ACK-Nachricht (Acknowledge) signalisiert, daß das Datenpaket erfolgreich empfangen wurde. Dieses Datenpaket kann dann aus dem Übertragungsspeicher 7 und dem Empfangsspeicher 10 gelöscht werden. Stellt sich dahingegen in dem Schritt 11 heraus, daß das Datenpaket fehlerhaft empfangen wurde und die Fehler durch die Redundanz nicht behoben werden können, so wird in dem Schritt 12 der sendenden Funkstation Tx mittels einer NACK-Nachricht (Negative Acknowledge) signalisiert, daß dieses Datenpaket nochmals übertragen werden muß. Dieses bedeutet, daß das Datenpaket weiterhin solange in dem Übertragungsspeicher 7 und in dem Empfangsspeicher 10 vorgehalten wird, bis es korrekt empfangen wurde oder gegebenenfalls eine maximal mögliche Übertragungsverzögerung überschritten wurde.

In der empfangenden Funkstation Rx werden in Schritt 13 die erfolgreich empfangenen Datenpakete des Datenstroms mittels des Datenstrom-Indikators einem diensteindividuellen Reordering-Speicher 14 bzw. 15 zugeordnet, in dem die ursprüngliche Reihenfolge der Datenpakete eines Datenstroms wiederhergestellt wird. Dieser jeweilge Datenstrom 1 bzw. 2 kann anschließend empfangsseitig in bekannter Weise weiterverarbeitet werden. Der Reordering-Speicher kann alternativ auch gemeinschaftlich für alle Dienste verwendet werden, da die Datenpakete der einzelnen Datenströme durch die Datenstrom-Indikatoren eindeutig zugeordnet werden können.

## Patentansprüche

1. Verfahren zur Übertragung von Datenpaketen gemäß einem HARQ-Prozess in einem Funk-Kommunikationssystem, bei dem sendeseitig Datenpakete von zumindest zwei Datenströmen (1,2) mit einem jeweiligen datenstrom- und/oder diensteindividuellen Indikator (ID) zur empfangsseitigen Zuordenbarkeit zu dem entsprechenden Datenstrom (1,2) gekennzeichnet werden, und für die zumindest zwei Datenströme (1,2) ein gemeinsamer HARQ-Prozess genutzt wird.

2. Verfahren nach Anspruch 1, bei dem
die Datenpakete der zumindest zwei Datenströme (1,2) zusätzlich durch eine jeweilige datenstrom- und/oder diensteindividuelle Sequenznummer (SN) gekennzeichnet werden.

3. Verfahren nach Anspruch 2, bei dem
für eine gleichzeitige Übertragung von mehreren Datenpaketen eines Datenstroms (1,2) diese Datenpakete verbunden werden, wobei die Sequenznummer (SN) mehreren Datenpaketen eines Datenstroms (1,2) zugeordnet wird.

4. Verfahren nach einem der Ansprüche 1 bis 3, bei dem
der HARQ-Prozess eine Bestätigung des korrekten oder fehlerhaften Empfangs der Datenpakete durchführt.

5. Verfahren nach einem der Ansprüche 1 bis 4, bei dem
in einem empfangsseitig verwirklichten Empfangsspeicher (10) empfangene Datenpakete mehrerer Datenströme (1,2) gespeichert werden.

6. Verfahren nach einem der Ansprüche 2 bis 5, bei dem
eine Anzahl von empfangenen Datenpaketen in einem datenstromund/oder diensteindividuellen Reordering-Speicher (14,15) gespeichert und mittels der zugeordneten Sequenznummer (SN) in eine ursprüngliche Reihenfolge gebracht wird.

7. Verfahren nach einem der Ansprüche 1 bis 6, bei dem
in einem sendeseitig verwirklichten Übertragungsspeicher (7) gesendete Datenpakete mehrerer Datenströme (1,2) gespeichert werden.

8. Funkstation eines Funk-Kommunikationssystems zum Übertragen von Datenpaketen gemäß einem HARQ-Prozess, mit sendeseitigen Mitteln zum Hinzufügen eines jeweiligen datenstromund/oder diensteindividuellen Indikators (ID) zu Datenpaketen von zumindest zwei Datenströmen (1,2) und zum Durchführen eines gemeinsamen HARQ-Prozesses für die zumindest zwei Datenströme (1,2).

9. Funkstation nach Anspruch 8, mit
Mitteln zum Hinzufügen einer jeweiligen datenstrom- und/oder diensteindividuellenSequenznummer (SN) zu den Datenpaketen der zumindest zwei Datenströme (1,2).

10. Funkstation nach Anspruch 8 oder 9, mit
Mitteln zum Bestätigen des korrekten oder fehlerhaften Empfangs von Datenpaketen in dem HARQ-Prozess.

11. Funkstation nach einem der Ansprüche 8 bis 10, mit
einem empfangsseitigen Empfangsspeicher (10) zur Speicherung von Datenpaketen der zumindest zwei Datenströme (1,2).

12. Funkstation nach einem der Ansprüche 8 bis 11, mit
einem sendeseitigen Übertragungsspeicher (7) zur Speicherung von gesendeten Datenpaketen der zumindest zwei Datenströme (1,2).

13. Funkstation nach einem der Ansprüche 8 bis 12,
die als eine Teilnehmerstation (UE) oder eine Basisstation (NB) ausgestaltet ist.

## Claims

1. Method for transmitting data packets according to a HARQ process in a radio communication system, wherein data packets of at least two data streams (1, 2) are identified on the send side by a respective data stream- and/or service-specific indicator (ID) so that they can be assigned to the corresponding data stream (1, 2) on the receive side, and a common HARQ process is used for said at least two data streams (1, 2).

2. Method according to Claim 1, wherein
the data packets of the at least two data streams (1, 2) are additionally identified by a respective data stream- and/or service-specific sequence number (SN).

3. Method according to Claim 2, wherein
for the purpose of a simultaneous transmission of a plurality of data packets of a data stream (1, 2), said data packets are concatenated, the sequence number (SN) being assigned to a plurality of data packets of a data stream (1, 2).

4. Method according to one of Claims 1 to 3, wherein
the HARQ process performs a confirmation of the correct or incorrect reception of the data packets.

5. Method according to one of Claims 1 to 4, wherein
received data packets of a plurality of data streams (1, 2) are stored in a receive buffer (10) implemented on the receive side.

6. Method according to one of Claims 2 to 5, wherein
a number of received data packets are stored in a data stream- or service-specific reordering buffer (14, 15) and restored to their original sequence by means of the assigned sequence number (SN).

7. Method according to one of Claims 1 to 6, wherein
transmitted data packets of a plurality of data streams (1, 2) are stored in a transmission buffer (7) implemented on the send side.

8. Radio station of a radio communication system for transmitting data packets according to a HARQ process, having means on the send side for adding a respective data stream- and/or service-specific indicator (ID) to data packets of at least two data streams (1, 2) and for performing a common HARQ process for the at least two data streams (1, 2).

9. Radio station according to Claim 8, having means for adding a respective data stream- and/or service-specific sequence number (SN) to the data packets of the at least two data streams (1, 2).

10. Radio station according to Claim 8 or 9, having means for confirming the correct or incorrect reception of data packets in the HARQ process.

11. Radio station according to one of Claims 8 to 10, having a receive buffer (10) on the receive side for storing data packets of the at least two data streams (1, 2).

12. Radio station according to one of Claims 8 to 11, having a transmission buffer (7) on the send side for storing transmitted data packets of the at least two data streams (1, 2).

13. Radio station according to one of Claims 8 to 12, which is embodied as a user terminal (UE) or a base station (NB).

## Revendications

1. Procédé de transmission de paquets de données selon un processus HARQ dans un système de communication radio, dans lequel, côté émission, les paquets de données d'au moins deux flux de données (1, 2) sont identifiés à l'aide d'un indicateur (ID) propre au flux de données et/ou aux services de manière à permettre, côté réception, l'attribution au flux de données (1, 2) correspondant et dans lequel est utilisé un processus HARQ commun pour lesdits au moins deux flux de données (1, 2).

2. Procédé selon la revendication 1, dans lequel les paquets de données desdits au moins deux flux de données (1, 2) sont identifiés en outre à l'aide d'un numéro de séquence (SN) propre au flux de données et/ou aux services.

3. Procédé selon la revendication 2, dans lequel, pour une transmission simultanée de plusieurs paquets de données d'un flux de données (1, 2), ces paquets de données sont reliés, le numéro de séquence (SN) étant attribué à plusieurs paquets de données d'un flux de données (1, 2).

4. Procédé selon l'une des revendications 1 à 3, dans lequel le processus HARQ effectue une confirmation de la réception correcte ou erronée des paquets de données.

5. Procédé selon l'une des revendications 1 à 4, dans lequel les paquets de données reçus de plusieurs flux de données (1, 2) sont mémorisés dans une mémoire de réception (10), réalisée côté réception.

6. Procédé selon l'une des revendications 2 à 5, dans lequel un nombre de paquets de données reçus est mémorisé dans une mémoire de réordonnancement (14, 15) propre au flux de données et/ou aux services, et mis dans un ordre initial au moyen du numéro de séquence (SN) attribué.

7. Procédé selon l'une des revendications 1 à 6, dans lequel les paquets de données émis de plusieurs flux de données (1, 2) sont mémorisés dans une mémoire de transmission (7), réalisée côté réception.

8. Station radio d'un système de communication radio destinée à transmettre des paquets de données selon un processus HARQ, comportant, côté émission, des moyens permettant d'ajouter aux paquets de données d'au moins deux flux de données (1, 2) un indicateur (ID) propre au flux de données et/ou aux services et de mettre en oeuvre un processus HARQ commun pour lesdits au moins deux flux de données (1, 2).

9. Station radio selon la revendication 8, comportant
des moyens permettant d'ajouter aux paquets de données desdits au moins deux flux de données (1, 2) un numéro de séquence (SN) propre au flux de données et/ou aux services.

10. Station radio selon la revendication 8 ou 9, comportant
des moyens permettant de confirmer la réception correcte ou erronée de paquets de données dans le processus HARQ.

11. Station radio selon l'une des revendications 8 à 10, comportant
côté réception, une mémoire de réception (10) permettant de mémoriser les paquets de données desdits au moins deux flux de données (1, 2).

12. Station radio selon l'une des revendications 8 à 11, comportant
côté émission, une mémoire de transmission (7) permettant de mémoriser les paquets de données émis desdits au moins deux flux de données (1, 2).

13. Station radio selon l'une des revendications 8 à 12,
configurée comme une station d'abonné (UE) ou une station de base (NB).
